# EUROPEAN PATENT APPLICATION

(11) **EP 4 568 049 A1**
(43) Date of publication of application: **11.06.2025**
(21) Application number: 24214205.7
(22) Date of filing: 20.11.2024
(51) Int. Cl.: H02J 3/16, H02J 3/18

(54) **ELECTROLYZER POWER CONTROL WITH HARMONIC ABSORPTION**

(30) Priority: 21.11.2023 US 202363601365 P
(71) Applicant: Bloom Energy Corporation, San Jose, CA 95134 (US)
(72) Inventor: PMSVVSV, Prasad, San Jose, CA, 95134 (US); MANDELA, Chaitanya, San Jose, CA, 95134 (US); YEDIDA, Ayyappa Rudrasimha, San Jose, CA, 95134 (US); NARAYANASAMY, Saravanakumar, San Jose, CA, 95134 (US); GOPALAKRISHNAN, Vishal, San Jose, CA, 95134 (US)
(74) Representative: Hoffmann Eitle

(57) **Abstract**

Provided is an electrolyzer power control system that includes a reactive harmonic current reference generation stage. The reactive harmonic current reference generation stage selects a reactive power set point for reactive power drawn by a rectifier from a grid, determines a reactive power current reference based on the reactive power set point, aggregates the reactive power current reference with a reference current of harmonic currents that the rectifier injects in or draws from the grid, determines a reactive harmonic current reference that compensates for both the reactive power and the harmonic currents and outputs the reactive harmonic current reference. Switching signals that operate the rectifier are generated based on the reactive harmonic current reference.

## Description

### BACKGROUND

### Technical Field

This application is directed to a power control system for an electrolyzer and, in particular, to a power control system that improves harmonic content and employs power factor correction.

### Description of the Related Art

Power quality issues appear in electrical grids as a result of non-unity power factor loads. The loads may be linear or non-linear. For example, non-power factor correction (non-PFC) rectifiers, motors and capacitors induce both poor power factors and higher harmonic content in a grid. The power quality issues are expensive to cure and mitigate.

### BRIEF SUMMARY

Provided is an electrolyzer power control system that improves the power quality and harmonic content of an electrical grid. The electrolyzer power control system aids a rectifier (that is used to convert AC power drawn from a grid to DC power for supplying to the electrolyzer) in operating in a manner that mitigates power quality decline in a grid. In addition, the rectifier mitigates preexisting power quality issues caused by other loads in the grid. The electrolyzer power control system integrates, in rectifier control, both power factor correction and harmonic absorption. Accordingly, the need for independent and dedicated equipment (such as passive filters, harmonic trap filters and active harmonic filters) is forgone, resulting in cost and space/area savings.

The electrolyzer power control system measures a voltage of the grid and determines, based on the voltage, harmonic currents that the rectifier injects in or draws from the grid and reference currents for the harmonic currents. The system uses the reference currents to determine a reference value for reactive current drawn from the grid. In particular, the electrolyzer power control system increases the reactive current drawn from the grid by the reference currents in order to absorb the reference currents, thereby improving grid stability.

The electrolyzer power control system allows setting the set point for the reactive power drawn from the grid based on a plurality of power setting techniques. An operator may set the reactive power drawn from the grid using an active-reactive controller, a volt-var controller, a power factor controller or a direct power command. The electrolyzer power control system is, thus, interoperable with multiple power control technologies.

### BRIEF DESCRIPTION OF THE SEVERAL VIEWS OF THE DRAWINGS

Figure 1A shows an electrolyzer power control system.
Figure 1B shows a rectifier coupled between a grid and an electrolyzer stack.
Figure 2 shows a power measurement stage and a harmonic stage in accordance with an embodiment.
Figure 3 shows a reactive harmonic current reference generation system.
Figure 4 shows a stack current controller in accordance with an embodiment.
Figure 5 shows a rectifier control system in a plant model.

### DETAILED DESCRIPTION

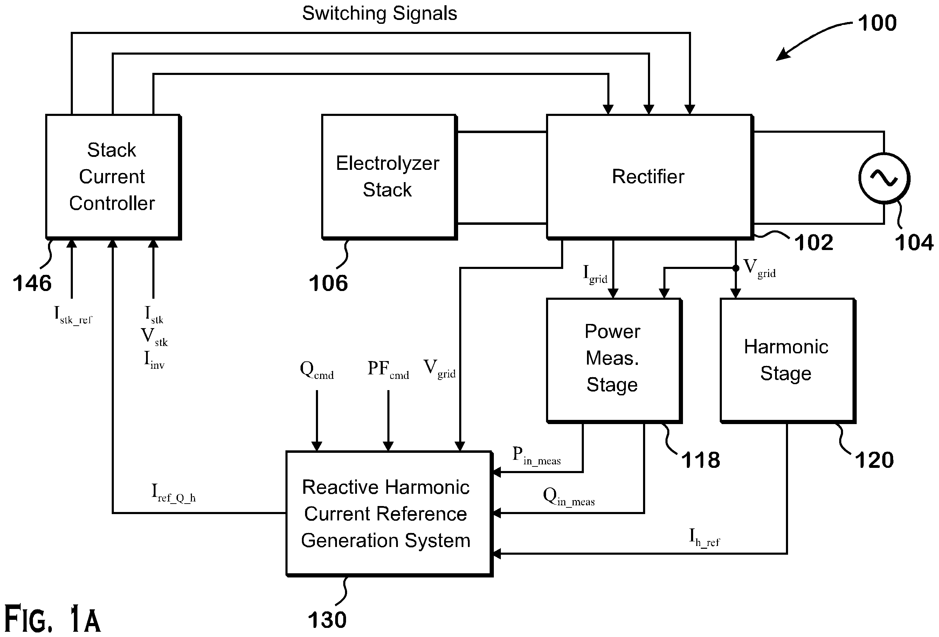

Figure 1A shows an electrolyzer power control system 100. The system 100 includes a rectifier 102 coupled between a grid 104 and an electrolyzer stack 106. The rectifier 102 operates based on switching signals that are received from a stack current controller 146. The stack current controller 146 receives current and voltage measurements and current reference values as described herein. The stack current controller 146 generates the switching signals based on the measurements and reference values. In particular, the current and voltage measurements include an output current (Iₛₜₖ) and an output voltage (Vₛₜₖ) that are provided to the electrolyzer stack 106 and an inverter current (Iᵢₙᵥ) at an input of the rectifier 102. The current reference values include an output current reference value (I_{stk-ref}) that specifies a target (or setpoint) value for the output current (Iₛₜₖ) and a reactive harmonic current reference (I_{ref-Q-h}). The reactive harmonic current reference (I_{ref-Q-h}) compensates for both reactive power and harmonic current in the grid.

The system 100 includes a reactive harmonic current reference generation stage 130. The reactive harmonic current reference generation stage 130 generates the reactive harmonic current reference (I_{ref-Q-h}). As described herein, the reactive harmonic current reference generation stage 130 may flexibly provide the ability to use one of a plurality of techniques for reactive harmonic current reference (I_{ref-Q-h}) generation. Operators may set the reactive harmonic current reference generation stage 130 to employ any one of the technologies.

The reactive harmonic current reference generation stage 130 may use active-reactive control to generate the reactive harmonic current reference (I_{ref-Q-h}). Per active-reactive control, the reference value (I_{ref-Q-h}) is generated based on a measured active grid power (Pᵢₙ₋ₘₑₐₛ) that is supplied to the rectifier 102. The reactive harmonic current reference generation stage 130 may use volt-var control to generate the reactive harmonic current reference (I_{ref-Q-h}). Per volt-var control, the reference value (I_{ref-Q-h}) is generated based on a grid voltage (V_{grid}) that is supplied to the rectifier 102.

Power factor control is another technique enabled by the reactive harmonic current reference generation stage 130 as described herein. In power factor control, the reference value (I_{ref-Q-h}) is generated based on a power factor command (PF_{cmd}) and the measured active grid power (Pᵢₙ₋ₘₑₐₛ) that is supplied to the rectifier 102. The reactive harmonic current reference generation stage 130 also enables an operator to set the reference value (I_{ref-Q-h}) based on a reactive power set point (Q_{cmd}) that is provided by an operator.

As described herein, irrespective of the selected technique, the reactive harmonic current reference generation stage 130 uses values of reference currents (I_{h-ref}) of harmonic currents that the rectifier 102 injects in or draws from the grid 104 as well as a measurement of the reactive power (Qᵢₙ₋ₘₑₐₛ) that is fed from the grid 104 to generate the reference value (I_{ref-Q-h}). A harmonic stage 120 determines the reference currents (I_{h-ref}) based the grid voltage (V_{grid}). The harmonic stage 120 outputs the reference currents (I_{h-ref}) to the reactive harmonic current reference generation stage 130. A power measurement stage 118 measures the active and reactive powers (Pᵢₙ₋ₘₑₐₛ, Qᵢₙ₋ₘₑₐₛ) that are fed from the grid 104 and outputs the measured the active and reactive powers (Pᵢₙ₋ₘₑₐₛ, Qin-meas) to the reactive harmonic current reference generation stage 130.

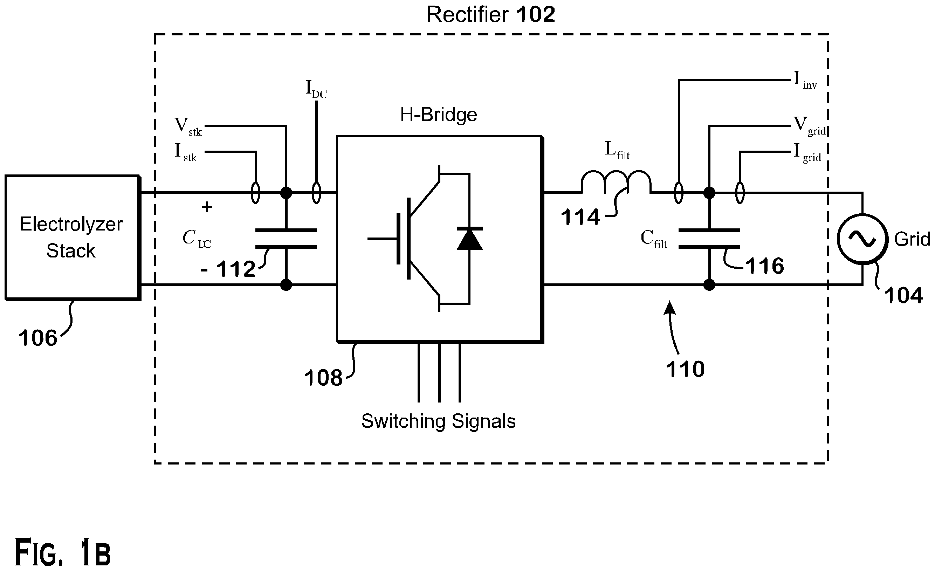

Figure 1B shows the rectifier 102 coupled between the grid 104 and the electrolyzer stack 106. The rectifier 102 includes an H-bridge 108, an input filter 110 and an output capacitance 112. The input filter 110 includes a filter inductance 114 and a filter capacitance 116.

The grid 104 may be a microgrid. The microgrid comprises a power system that is capable of operating independently of a main grid, and the microgrid is smaller in scale than the main grid. The microgrid may include distributed electrical power sources of the same type or of different types. Examples of the types of power sources include natural gas generators, diesel generators, solar, wind, geothermal and tidal power sources. The grid 104 may supply alternating current (AC) to the rectifier 102. The grid 104 may also be a main grid, such as a grid of a country or a region including multiple states.

The electrolyzer stack 106 broadly represents one or more electrolyzer modules capable of generating hydrogen through electrolysis. An electrolyzer is an electrochemical device that uses electricity to divide water molecules into hydrogen and oxygen using an electrolysis process. For example, the electrolyzer may comprise solid oxide electrolyzer cells (SOECs) arranged in one or more stacks inside a hotbox. In an electrolyzer system utilizing SOECs, a cathode electrode is separated from an anode electrode by a solid oxide electrolyte. When a SOEC is used to produce hydrogen through electrolysis, a positive potential is applied to the air side of the SOEC and oxygen ions are transported from the fuel (e.g., steam) side to the air side. During SOEC operation, water (e.g., steam) in the fuel stream is reduced (H₂O + 2e⁻ →O²⁻ + H₂) to form H₂ gas and O²⁻ ions, the O²⁻ ions are transported through the solid electrolyte, and then oxidized (e.g., by an air inlet stream) on the air side (O²⁻ to O₂) to produce molecular oxygen (e.g., oxygen enriched air). An electrolyzer operates more efficiently when the flow of DC power is constant.

The rectifier 102 (also referred to as an AC-to-DC power converter) converts AC power received from the grid 104 into DC power for supplying to the electrolyzer stack 106. The rectifier 102 may be a thyristor-based N-pulse rectifier (also referred to as a silicon-controlled rectifier (SCR)) or a power factor controlled (PFC) rectifier. In an N-pulse rectifier, N represents the number of pulses and is typically a multiple of six (or twice the number of phases in a three-phase AC system). For example, N may be 6, 12, 18 or 24. An N-pulse rectifier may produce a higher harmonic content in the output current supplied to the electrolyzer stack 106. Increasing the harmonic content results in increasing a voltage total harmonic distortion (VTHD) and reducing the power factor.

The rectifier 102 may also be a power factor controlled (PFC) rectifier. A PFC rectifier, such as a PFC rectifier with an active front end converter, may resolve harmonics and provide near unity power factor. However, the PFC rectifier may not resolve external power quality issues caused by other loads that exist in the grid 104.

The filter capacitance 116 has first and second sides. The filter inductance 114 has first and second terminals. The H-bridge 108 has first and second power inputs, first and second power outputs and first, second and third control inputs. The output capacitance 112 has first and second sides. In addition, the grid 104 has first and second outputs, and the electrolyzer 106 has first and second inputs.

The first and second sides of the filter capacitance 116 are coupled to the first and second outputs, respectively, of the grid 104. The first terminal of the filter inductance 114 is coupled to the first side of the filter capacitance 116. The first power input of the H-bridge 108 is coupled to the second terminal of the filter inductance 114, and the second power input of the H-bridge 108 is coupled to the second side of the filter capacitance 116. The first and second power outputs of the H-bridge 108 are coupled to the first and second sides, respectively, of the output capacitance 112. The first and second sides of the output capacitance 112 are coupled to the first and second inputs, respectively, of the electrolyzer stack 106.

The grid 104 provides a grid current (I_{grid}) to the filter 110. The filter 110 filters out switching frequency components from the grid current (I_{grid}). The grid current (I_{grid}) results in a voltage (V_{grid}) across the sides of the filter capacitance 116, which supplies an inverter current (Iᵢₙᵥ) to the filter inductance 114.

The H-bridge 108 receives, over its first and second power inputs, the AC power provided by the grid 104 and filtered by the filter 110. The H-bridge 108 includes switches. For example, the H-bridge 108 may include multiple semiconductor switches, such as insulated-gate bipolar transistors (IGBTs), metal-oxide-semiconductor field-effect transistors (MOSFETs) or a combination thereof. The H-bridge 108 receives, over its first, second and third control inputs, switching signals, which may be pulse-width modulation (PWM) signals. The H-bridge 108 operates the switches thereof in accordance with the switching signals. As result of the switching operations, the H-bridge 108 outputs DC voltage and DC current (I_{DC}) to the output capacitance 112. In response, an output voltage (Vₛₜₖ) forms across the sides of the output capacitance 112, which regulates the voltage provided to the electrolyzer stack 106. Correspondingly, an output current (Iₛₜₖ) is also provided to the electrolyzer stack 106.

It is noted that in the system 100, the grid current (I_{grid}), grid voltage (V_{grid}) across the sides of the filter capacitance 116, inverter current (Iᵢₙᵥ), DC current (I_{DC}), output voltage (Vₛₜₖ) and output current (Iₛₜₖ) are measured. For example, the system 100 includes voltmeters for measuring the voltage (V_{grid}) across the sides of the filter capacitance 116 and the output voltage (Vₛₜₖ), respectively. The system 100 also includes ammeters for measuring grid current (I_{grid}), inverter current (Iᵢₙᵥ), DC current (I_{DC}) and output current (Iₛₜₖ), respectively.

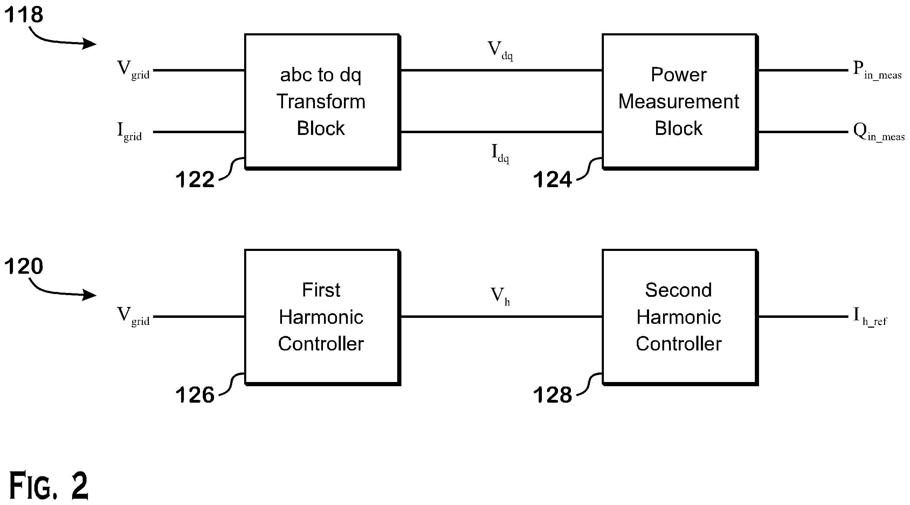

Figure 2 shows the power measurement stage 118 and the harmonic stage 120 in accordance with an embodiment. The power measurement stage 118 includes an abc-to-dq transformation block 122 and a power measurement block124. The harmonic stage 120 includes a first harmonic controller 126 and a second harmonic controller 128. The controllers 122, 124, 126, 128 may each be any type of controller, such as a proportional integral (PI) controller, among others.

In the power measurement stage 118, the abc-to-dq transformation block 122 receives measurements of the grid current (I_{grid}) and the grid voltage (V_{grid}), which are three-phase. The abc-to-dq transformation block 122 transforms the grid current (I_{grid}) from an abc signal to a dq0 rotating reference frame signal. The abc-to-dq transformation block 122 outputs a current (I_{dq}) representing the grid current (I_{grid}). The abc-to-dq transformation block 122 transforms the grid voltage (V_{grid}) from an abc signal to a dq0 rotating reference frame signal and outputs a voltage (V_{dq}) representing the grid voltage (V_{grid}). The power measurement block 124 receives the dq representations of the grid current (I_{grid}) and the grid voltage (V_{grid}) and measures the active and reactive grid powers (Pᵢₙ₋ₘₑₐₛ, Qᵢₙ₋ₘₑₐₛ) resulting from the grid current (I_{grid}) and the grid voltage (V_{grid}) drawn by the rectifier 108. The power measurement block 124 outputs the measured active and reactive grid powers (Pᵢₙ₋ₘₑₐₛ, Qᵢₙ₋ₘₑₐₛ).

The first harmonic controller 126 receives a measurement of the grid voltage (V_{grid}). As described herein, the grid voltage (V_{grid}) is an AC voltage drawn by the rectifier 108. The first harmonic controller 126 determines, based on the measured grid voltage (V_{grid}), the voltage magnitudes (Vₕ) at integral harmonics of a fundamental frequency of the grid. The integral harmonics occur at integer multiples of the fundamental frequency. For example, if the fundamental frequency is 60 hertz (Hz), the integral harmonics occur at 120Hz, 180Hz and so on. The first harmonic controller 126 outputs the voltage magnitudes (Vₕ) at the integral harmonics.

The second harmonic controller 128 receives the voltage magnitudes (Vₕ) at the integral harmonics. The second harmonic controller 128 determines, based on the voltage magnitudes (Vₕ), reference currents (I_{h-ref}) of the harmonic currents that the rectifier 102 injects in or draws from the grid 104. The reference currents (I_{h-ref}) are used by the reactive harmonic current reference generation stage 130 as described herein to generate the reactive harmonic current reference (I_{ref-Q-h}). The reactive harmonic current reference (I_{ref-Q-h}) is employed in generating switching signals that absorb grid harmonics from the grid 104 and improve the power quality of the grid.

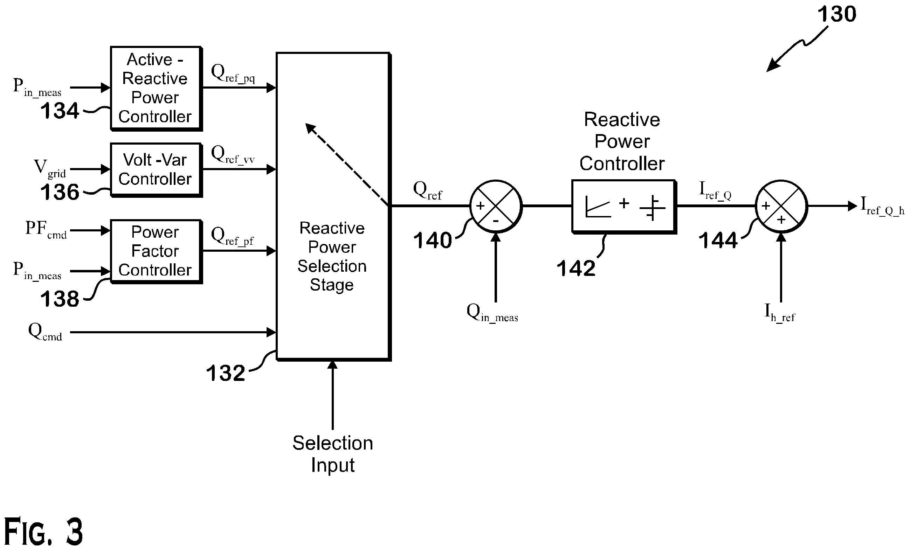

Figure 3 shows the reactive harmonic current reference generation stage 130. The stage 130 includes a reactive power selection stage 132, which sets a reactive power set point from any number of standardized techniques for providing the reactive power set point. In stage 130, the reactive power set point may be provided by an active-reactive power controller 134, a volt-var controller 136, a power factor controller 138 or directly as a reactive power command. The stage 130 includes a subtractor 140, a reactive power controller 142 and an adder 144.

The active-reactive power controller 134 receives the measured active grid power (Pᵢₙ₋ₘₑₐₛ) that is determined by the power measurement stage 124. The active-reactive power controller 134 uses an active-reactive (P-Q) function to determine a reactive power set point (Q_{ref-pq}) from the measured active grid power (Pᵢₙ₋ₘₑₐₛ). The P-Q function may be a user-defined curve that compensates the reactive power as a function of the active power received from the grid. The P-Q function may be a piece-wise linear equation in accordance with a grid standard, such as the Institute of Electrical and Electronics Engineers (IEEE) 1547-2018 standard.

The volt-var controller 136 receives the grid voltage (V_{grid}). As described herein, the grid voltage (V_{grid}) may be measured across the sides of the filter capacitance 116. The volt-var controller 136 determines a reactive power set point (Q_{ref-vv}) from the grid voltage (V_{grid}). The volt-var controller 136 may determine the reactive power set point (Q_{ref-vv}) using a voltage-reactive (V-Q) function. The V-Q function may be a curve that is set by a user or an operator. The V-Q function may support a grid during voltage sags caused by high reactive power loads or faults. For example, the V-Q function may be a piece-wise linear equation in accordance with a grid standard, such as the IEEE 1547-2018 standard.

The power factor controller 138 determines a reactive power set point (Q_{ref-pf}) based on a power factor command (PF_{cmd}) and the measured active grid power (Pᵢₙ₋ₘₑₐₛ). The power factor controller 138 receives the power factor command (PF_{cmd}) and the measured active grid power (Pᵢₙ₋ₘₑₐₛ). The power factor controller 138 sets the reactive power set point (Q_{ref-pf}) as commanded by the power factor command (PF_{cmd}). During operation, the power factor controller 138 maintains the commanded power factor at various load power points by varying the reactive power. The power factor controller 138 receives the measured active grid power (Pᵢₙ₋ₘₑₐₛ) and sets the reactive power component, based on the measured active grid power (Pᵢₙ₋ₘₑₐₛ). The power factor controller 138 sets the reactive power component to maintain the received power factor command (PF_{cmd}).

The reactive power selection stage 132 has four inputs. First, second and third inputs of the four inputs are coupled to the outputs of the active-reactive controller 134, the volt-var controller 136 and power factor controller 138, respectively. A fourth input receives a reactive power set point (Q_{cmd}) that is directly specified by a user. The reactive power set point (Q_{cmd}) may specify a reactive power output at all load points. The user may change the reactive power set point (Q_{cmd}) at different times during operation.

At any one point in time, the reactive power selection stage 132 may receive one, two, three or four reactive power set points. The reactive power selection stage 132 has a plurality of inputs respectively corresponding to a plurality of types of set points. The reactive power selection stage 132 also receives a selection input. The selection input may specify which of the reactive power set points (or types or techniques thereof) the reactive power selection stage 132 is to select and output. For example, the selection input may be a two-bit signal having four possible states, thereby allowing for the selection of one of four reactive power set points.

The reactive power selection stage 132 enables operability with multiple reactive power setting techniques. An operator may use an active-reactive, volt-var, power factor or direct setting technique for establishing the reactive power set point. The reactive power selection stage 132 enables use of the reactive harmonic current reference generation stage 130 with a plurality of reactive power setting techniques by virtue of being interoperable with multiple techniques and offering the ability to select one of the techniques. Thus, one harmonic current reference generation stage 130 may be provided in power equipment and deployed across various grids that are controlled by different reactive power setting techniques.

The subtractor 140 of the reactive harmonic current reference generation stage 130 receives the reactive power set point (Q_{ref}) output by the reactive power selection stage 132 and receives the measured reactive grid power (Qᵢₙ₋ₘₑₐₛ). The subtractor 140 subtracts the reactive power set point (Q_{ref}) from the measured reactive grid power (Qᵢₙ₋ₘₑₐₛ) and outputs a result of the subtraction. Thus, the subtractor 140 outputs a quantity of reactive power by which the measured reactive grid power (Qᵢₙ₋ₘₑₐₛ) either exceeds the reactive power set point (Q_{ref}) or is less than the reactive power set point (Q_{ref}).

The reactive power controller 142, which may be a PI controller, receives the subtraction result. The reactive power controller 142 generates a reactive current reference (I_{ref-Q}) from the subtraction result. The adder 144 receives the reactive current reference (I_{ref-Q}) and the reference currents (I_{h-ref}) of the harmonic currents that the rectifier 102 injects in or draws from the grid 104. The adder 144 adds the reactive current reference (I_{ref-Q}) and the reference currents (I_{h-ref}) and generates a reactive harmonic current reference (I_{ref-Q-h}), which is fed to the stack current controller 146 as described herein.

When the reactive harmonic current reference (I_{ref-Q-h}) is used for controlling the rectifier 102, the rectifier 102 compensates for both the reactive power and harmonic current. Thus, the rectifier 102 combines PFC with reactive power and harmonic current compensation to improve the power quality of the grid 104.

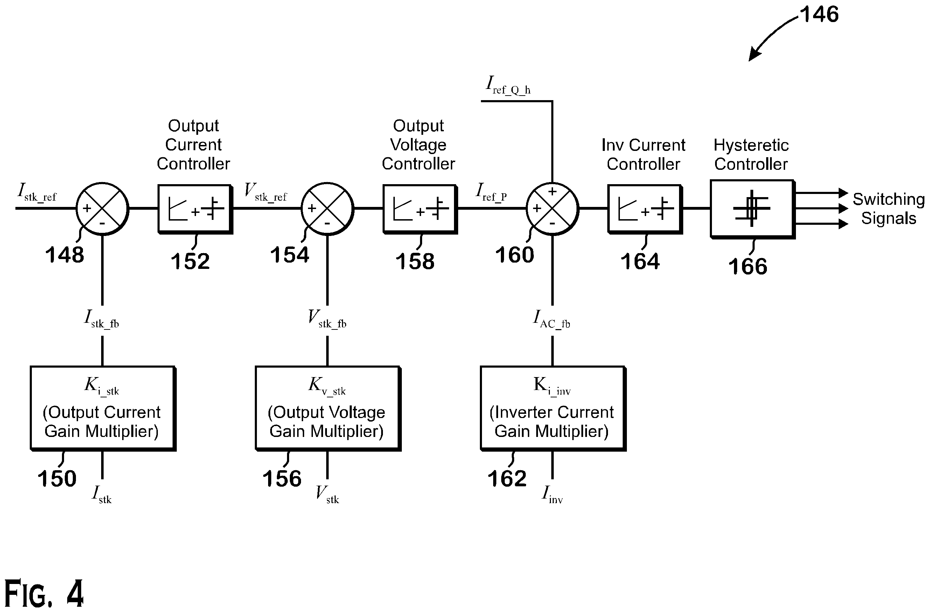

Figure 4 shows the stack current controller 146 in accordance with an embodiment. The stack current controller 146 generates the switching signals that are used to operate the H-bridge 108. The switching signals may be pulse-width modulation (PWM) signals for controlling the switches of the H-bridge 108. The stack current controller 146 determines the power demanded by the electrolyzer stack 106 and sets the switching signals such that the H-bridge 108 outputs the demanded power. At the same time, the stack current controller 146 adjusts the switching signals to cause the rectifier 102 to absorb grid harmonics.

The switching signals, by virtue of their use in the H-bridge 108, control the active power drawn by the rectifier 102. The stack current controller 146 receives the reactive harmonic current reference (I_{ref-Q-h}) from the reactive harmonic current reference generation stage 130. The stack current controller 146 produces switching signals that compensate for both the reactive power and harmonic current.

The stack current controller 146 includes first, second and third subtractors 148, 154, 160, an output current gain multiplier 150, an output voltage gain multiplier 156, an inverter current gain multiplier 162, an output current controller 152, an output voltage controller 158, an inverter current controller 164 and a hysteretic controller 166. The controllers 152, 158, 164 may be of the same type and may be PI controllers. Alternatively, the controllers 152, 158, 164 may have different types and each may be a proportional (P) controller, PI controller or proportional integral derivative (PID) controller.

A controller may have one or more of a proportional, integral and derivative components. A proportional component is a proportional term used to produce an output that is proportional to an error (or difference) between reference and measured values received at an input of the controller. An integral component is an integral term that accumulates past errors over time. The integral term integrates the error and outputs an integral of the error. A derivative component is a derivative term that predicts a future error based on a rate of change of the input. A PID controller may aggregate all three terms, whereas a PI controller may aggregate the proportional and integral terms.

The output current gain multiplier 150 receives the output current (Iₛₜₖ), multiplies the output current (Iₛₜₖ) by a gain (Kᵢ₋ₛₜₖ) and outputs a gain-adjusted output current (I_{stk-fb}). The output voltage gain multiplier 156 receives the output voltage (Vₛₜₖ), multiplies the output voltage (Vₛₜₖ) by a gain (Kᵥ₋ₛₜₖ) and outputs a gain-adjusted output voltage (V_{stk-fb}). The inverter current gain multiplier 162 receives the inverter current (Iᵢₙᵥ), multiplies the inverter current (Iᵢₙᵥ) by a gain (Kᵢ₋ᵢₙᵥ) and outputs a gain-adjusted inverter current (I_{AC-fb}). Each gain may be any multiplier, such as 1, 1.05 or 0.95, among others. Each gain multiplier 150, 156, 162 may represent a gain multiplier of a gain network that adjusts the sensed voltage or current.

The first subtractor 148 receives an output current reference value (I_{stk-ref}). The output current reference value (I_{stk-ref}) may specify a target (or setpoint) value for the output current (Iₛₜₖ). The output current reference value (I_{stk-ref}) may be provided by an operator and may specify the desired value of the output current (Iₛₜₖ) to the electrolyzer stack 106. The first subtractor 148 subtracts the gain-adjusted output current (I_{stk-fb}) from the output current reference value (I_{stk-ref}) and determines the difference between the two values. The difference is an error value by which the gain-adjusted output current (I_{stk-fb}) departs from the output current reference value (I_{stk-ref}). The stack current controller 146 outputs switching signals used to operate the H-bridge 108 in a manner that reduces the difference.

The output current controller 152 receives the difference between the output current reference value (I_{stk-ref}) and the gain-adjusted output current (I_{stk-fb}). The output current controller 152 generates an output voltage reference (V_{stk-ref}) that reduces the difference between the two quantities. For example, the output current controller 152 may operate to minimize the difference to zero. The second subtractor 154 receives the output voltage reference (V_{stk-ref}) and gain-adjusted output voltage (V_{stk-fb}), determines a difference between the output voltage reference (V_{stk-ref}) and gain-adjusted output voltage (V_{stk-fb}) and outputs the difference.

The output voltage controller 158 receives the difference between the output voltage reference (V_{stk-ref}) and gain-adjusted output voltage (V_{stk-fb}). Similar to the output current controller 152, the output voltage controller 158 regulates the gain-adjusted output voltage (V_{stk-fb}) to the output voltage reference (V_{stk-ref}). The output voltage controller 158 generates and outputs an active power current reference (I_{ref-P}). The active power current reference (I_{ref-P}) is a current value that regulates the active power to a power level. The power level is a power level at which the difference between the output voltage reference (V_{stk-ref}) and gain-adjusted output voltage (V_{stk-fb}) is reduced or made zero. It is noted that use of the output current controller 152 and output voltage controller 158 in series results in regulating both the voltage and current that are provided to the electrolyzer stack 106.

The third subtractor 160 receives the active power current reference (I_{ref-P}), the reactive harmonic current reference (I_{ref-Q-h}) and the gain-adjusted inverter current (I_{AC-fb}). The third subtractor 160 adds the active power current reference (I_{ref-P}) and the reactive harmonic current reference (I_{ref-Q-h}), which together form a total current reference (or apparent power current reference). The active power current reference (I_{ref-P}) and the reactive harmonic current reference (I_{ref-Q-h}) may each be sinusoidal.

The third subtractor 160 subtracts the gain-adjusted inverter current (I_{AC-fb}) from the total current reference and generates and outputs a difference between the total current reference and the gain-adjusted inverter current (I_{AC-fb}). The inverter current controller 164 receives the difference. The inverter current controller 164 outputs a current reference that reduces the difference or makes the difference equal to zero. The hysteretic controller 166 receives the current reference and generates the switching signals that are output to the H-bridge.

The hysteretic controller 166 may be configured with upper and lower thresholds that the hysteretic controller 166 uses to control a duty cycle of the switching signals. The thresholds have a hysteresis band therebetween. When the current reference exceeds the upper threshold, the controller turns off a switching signal, resulting in a decrease in output current. Conversely, when the current reference drops below the lower threshold, the controller turns on a switching signal to increase the output current.

It is noted that the reactive harmonic current reference (I_{ref-Q-h}) regulates both the reactive current drawn from the grid 104 and supplied to the electrolyzer stack 106 and the absorption of current harmonics that exist in the grid 104. Setting the reactive current in accordance with the reactive harmonic current reference (I_{ref-Q-h}) results in both regulating the reactive current and reducing current harmonics in the grid. The active power current reference (I_{ref-P}) regulates the active current supplied to the electrolyzer stack 106. The aggregation of the two current references (I_{ref-Q-h}, I_{ref-P}) by the subtractor 160 is made to regulate both current components and improve grid quality and stability.

As described herein, a controller may include a data processing system, such as an Application Specific Integrated Circuit (ASIC), Field-Programmable Gate Array (FPGA), electronic circuit, central processing unit (CPU), arithmetic and logic unit (ALU) or a combination thereof. The controller may include non-transitory memory, which may be read-only, programmable read-only, random access, flash memory, etc. The non-transitory memory stores machine-readable instructions that when executed by the controller cause the controller to perform the techniques described herein. The machine-readable instructions may be one or more software or firmware programs or routines. The controller may include combinational logic circuits, input circuits (inputs), output circuits (outputs), signal conditioning circuits, buffers and other components, which may be accessed by and utilized by the data processing system to perform the techniques described herein. The input and output circuits may include analog/digital converters and related devices that monitor inputs from sensors. Software, firmware, programs, instructions, control routines, code, algorithms and similar terms mean controller-executable instruction sets including calibrations and look-up tables. A controller may communicate using a direct wired point-to-point link, a networked communication bus link, a wireless link or any other type of communication technology. Communication includes exchanging data signals, including, for example, electrical signals via a conductive medium; electromagnetic signals via air; optical signals via optical waveguides; etc. The data signals may include discrete, analog and/or digitized analog signals representing inputs from sensors and communication between controllers.

It is noted that although various functionality is described herein as being performed by different controllers or other devices (such as, adders and subtractors), one controller may perform functionality of multiple controllers. For example, one controller may perform the functionality of the gain multipliers 150, 156, 162, subtractors 148, 154, 160 and controllers 152, 158, 164, 166 described with reference to Figure 4. Alternatively, the combined techniques may be performed by more than one controller or other devices.

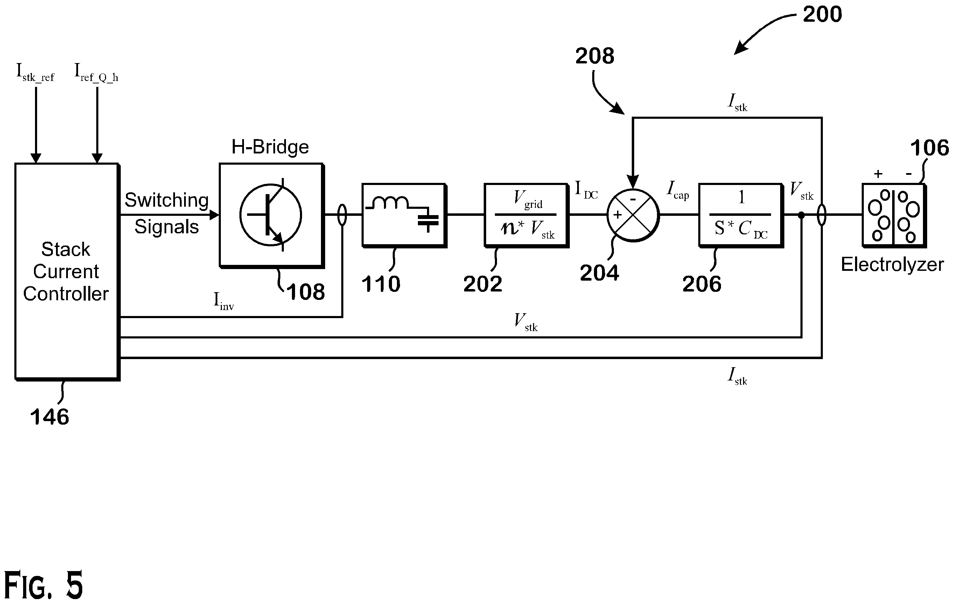

Figure 5 shows a rectifier control system 200 in a plant model. The rectifier control system 200 includes the stack current controller 146, the H-bridge 108, the filter 110, a converter 202, a subtractor 204, a capacitance 206 and the electrolyzer stack 106. The stack current controller 146 generates switching signals for operating the H-bridge 108 using the output current reference value (I_{stk-ref}) and the reactive harmonic current reference (I_{ref-Q-h}). The stack current controller 146 generates an active power current reference (I_{ref-P}) based on the output current reference value (I_{stk-ref}) as described with reference to Figure 4 herein. The stack current controller 146 adds the active power current reference (I_{ref-P}) and the reactive harmonic current reference (I_{ref-Q-h}) to generate an apparent current reference for current control. The stack current controller 146 additionally generates the switching signals using hysteretic control as described herein. Hysteretic control controls the inverter current at switching cycle level instantaneously.

The H-bridge 108 generates a rectifier current that is provided to the filter 110. The filter 110 filters switching frequency components from the rectifier current. AC power imported by the H-bridge 108 (and rectifier thereof) is converted to DC power by the converter 202. DC current (I_{DC}) is fed to the electrolyzer stack 106 using the capacitance 206, which buffers DC voltage. The subtractor 204 subtracts the current flowing into electrolyzer stack 106 from the DC current (I_{DC}) output by the converter 202. The subtractor 204 outputs a capacitance current (I_{cap}), which combines with charge stored by the capacitance 206 to form the output current (Iₛₜₖ). The output voltage (Vₛₜₖ) is controlled by supplying the capacitance current (I_{cap}) to the capacitance 206. The capacitance current (I_{cap}) is generated by subtracting the output current (Iₛₜₖ) from the DC current (I_{DC}) via a feedback loop 208.

The various embodiments described above can be combined to provide further embodiments. These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled.

## Claims

1. An electrolyzer power control system, comprising:
an electrolyzer stack;
a rectifier configured to:
receive an input voltage and an input current from a grid;
receive switching signals;
operate switches of the rectifier based on the switching signals; and
in response to operating the switches, provide an output voltage and an output current to the electrolyzer stack;
a reactive harmonic current reference generation stage configured to:
select a reactive power set point for reactive power drawn by the rectifier from the grid;
determine a reactive power current reference based on the reactive power set point;
aggregate the reactive power current reference with a reference current of harmonic currents that the rectifier injects in or draws from the grid;
determine a reactive harmonic current reference that compensates for both the reactive power and the harmonic currents; and
a stack current controller configured to generate the switching signals based on the reactive harmonic current reference.

2. The electrolyzer power control system according to claim 1, wherein the reactive harmonic current reference generation stage is configured to:
receive a plurality of types of reactive power set points;
receive a selection input specifying a reactive power set point type of the plurality of types of reactive power set points; and
set the reactive power set point to a received reactive power set point having a type that matches the reactive power set point type.

3. The electrolyzer power control system according to claim 2, wherein the plurality of types of reactive power set points include an active-reactive reactive power set point, a volt-var reactive power set point, a power factor reactive power set point or directly-set reactive power set point.

4. The electrolyzer power control system according to claim 2, wherein the reactive harmonic current reference generation stage is configured to:
receive a measurement of the reactive power drawn by the rectifier from the grid;
determine a difference between the reactive power set point and the measurement of the reactive power; and
determine the reactive power current reference based on the difference.

5. The electrolyzer power control system according to claim 4, comprising:
a power measurement stage configured to:
receive a measurement of the output voltage and a measurement of an output current; and
determine the measurement of the reactive power based on the measurement of the output voltage and the measurement of the output current.

6. The electrolyzer power control system according to claim 1, wherein the stack current controller is configured to:
add the reactive harmonic current reference and an active power current reference to generate a total current reference;
determine a difference between a current measured at an input of the rectifier and the total current reference; and
generate the switching signals based on the difference.

7. The electrolyzer power control system according to claim 6, wherein the stack current controller is configured to:
receive an output current reference value that specifies a target value for the output current;
determine a first difference between the output current reference value and a measurement of the output current; and
determine an output voltage reference value based on the first difference;
determine a second difference between the output voltage reference value and a measurement of the output voltage; and
determine the active power current reference based on the second difference.

8. The electrolyzer power control system according to claim 1, comprising:
a harmonic configured to:
receive a measurement of the input voltage;
determine, based on the input voltage, voltage magnitudes at integral harmonics of a fundamental frequency of the grid; and
determine, based on the voltage magnitudes at the integral harmonics, the reference current of the harmonic currents.

9. The electrolyzer power control system according to claim 8, wherein the integral harmonics at integer multiples of the fundamental frequency of the grid.

10. An electrolyzer power control system, comprising:
a reactive harmonic current reference generation stage configured to:
select a reactive power set point for reactive power drawn by a rectifier from a grid;
determine a reactive power current reference based on the reactive power set point;
aggregate the reactive power current reference with a reference current of harmonic currents that the rectifier injects in or draws from the grid;
determine a reactive harmonic current reference that compensates for both the reactive power and the harmonic currents; and
output the reactive harmonic current reference, wherein switching signals that operate the rectifier are generated based on the reactive harmonic current reference.

11. The electrolyzer power control system according to claim 10, wherein the reactive harmonic current reference generation stage is configured to:
receive a plurality of types of reactive power set points;
receive a selection input specifying a reactive power set point type of the plurality of types of reactive power set points; and
set the reactive power set point to a received reactive power set point having a type that matches the reactive power set point type.

12. The electrolyzer power control system according to claim 11, wherein the plurality of types of reactive power set points include an active-reactive reactive power set point, a volt-var reactive power set point, a power factor reactive power set point or directly-set reactive power set point.

13. The electrolyzer power control system according to claim 11, wherein the reactive harmonic current reference generation stage is configured to:
receive a measurement of the reactive power drawn by the rectifier from the grid;
determine a difference between the reactive power set point and the measurement of the reactive power; and
determine the reactive power current reference based on the difference.

14. The electrolyzer power control system according to claim 13, comprising:
a power measurement stage configured to:
receive a measurement of an output voltage of the rectifier and a measurement of an output current of the rectifier; and
determine the measurement of the reactive power based on the measurement of the output voltage and the measurement of the output current.

15. A method, comprising:
selecting a reactive power set point for reactive power drawn by a rectifier from a grid;
determining a reactive power current reference based on the reactive power set point;
aggregating the reactive power current reference with a reference current of harmonic currents that the rectifier injects in or draws from the grid;
determining a reactive harmonic current reference that compensates for both the reactive power and the harmonic currents; and
generating switching signals, for operating the rectifier, based on the reactive harmonic current reference.

16. The method according to claim 15, comprising:
receiving a plurality of types of reactive power set points;
receiving a selection input specifying a reactive power set point type of the plurality of types of reactive power set points; and
setting the reactive power set point to a received reactive power set point having a type that matches the reactive power set point type.

17. The method according to claim 16, wherein the plurality of types of reactive power set points include an active-reactive reactive power set point, a volt-var reactive power set point, a power factor reactive power set point or directly-set reactive power set point.

18. The method according to claim 16, comprising:
receive a measurement of the reactive power drawn by the rectifier from the grid;
determine a difference between the reactive power set point and the measurement of the reactive power; and
determine the reactive power current reference based on the difference.

19. The method according to claim 18, comprising:
receiving a measurement of an output voltage of the rectifier and a measurement of an output current of the rectifier; and
determining the measurement of the reactive power based on the measurement of the output voltage and the measurement of the output current.

20. The method according to claim 15, comprising:
adding the reactive harmonic current reference and an active power current reference to generate a total current reference;
determining a difference between a current measured at an input of the rectifier and the total current reference; and
generating the switching signals based on the difference.
